# EUROPÄISCHE PATENTSCHRIFT

(11) **EP 1 017 965 B1**
(45) Veröffentlichungstag und Bekanntmachung des Hinweises auf die Patenterteilung: **23.01.2002**
(21) Anmeldenummer: 98952533.2
(22) Anmeldetag: 27.08.1998
(51) Int. Cl.: G01C 21/20, G08G 1/127, G08G 1/0968, G09B 29/10

(54) **VERFAHREN ZUR AKTUALISIERUNG EINER DIGITALEN STRASSENKARTE**
METHOD FOR UPDATING A DIGITAL ROAD MAP
PROCEDE POUR ACTUALISER UNE CARTE ROUTIERE NUMERIQUE

(30) Priorität: 22.09.1997 DE 19742414
(43) Veröffentlichungstag der Anmeldung: 12.07.2000
(73) Patentinhaber: MANNESMANN Aktiengesellschaft, 40213 Düsseldorf (DE)
(72) Erfinder: MÖHLENKAMP, Klaus, D-40545 Düsseldorf (DE)
(74) Vertreter: Meissner, Peter E., Dipl.-Ing.
(86) Internationale Anmeldenummer: DE9802574
(87) Internationale Veröffentlichungsnummer: WO9915857

(56) Entgegenhaltungen:
- WO-A-96/07110
- DE-A- 4 230 299
- DE-A- 4 300 927
- DE-A- 19 701 370
- DE-C- 19 525 291

## Beschreibung

Die Erfindung betrifft ein Verfahren zur Aktualisierung und/oder Ergänzung einer digitalen Straßenkarte eines Verkehrsnetzes, ein Endgerät und eine Verkehrszentrale.

Aus der DE 195 25 291 A1 sind ein Verfahren und ein System zur Aktualisierung von digitalen Straßenkarten bekannt, bei welchen von Fahrzeugen einer Probefahrzeugflotte laufend die geographische Fahrzeugposition und Attribute wie insbesondere die Fahrtrichtung in einer von jeweils einem Fahrzeug durchfahrenen Straße erfaßt und an eine Verkehrszentrale per Funk übermittelt wird; in der Verkehrszentrale wird anhand der jeweils von einem Fahrzeug der Probefahrzeugflotte laufend übertragenen aktuellen geographischen Fahrzeug-Position und der Attribute, insbesondere der möglichen Fahrtrichtung, der vom Fahrzeug befahrenen Straßenabschnitte eine Aktualisierung dieser Attribute bezüglich derjenigen Straßenabschnitte in der digitalen Karte in der Zentrale, welche durch die übertragene Fahrzeugposition bestimmt werden, durchgeführt. Dabei fallen bei der Übertragung von Informationen vom Endgerät an die Verkehrszentrale relativ hohe Telekommunikationskosten an.

Die JP 08271272 A offenbart ein Navigations-Endgerät für ein Kraftfahrzeug mit einem GPS-Navigationssystem, einer digitalen Karte und einer zentralen Steuereinrichtung mit einem Speicher, bei welchem bei Befahren einer nicht in der CD-Rom-Straßenkarte im Endgerät enthaltenen Straße auf Eingabe eines Benutzers hinsichtlich des Straßenanfangsknotens und Straßenverlaufes der neuen Straße diese im Endgerät gespeichert wird.

Die DE 195 25 291 C1 offenbart ein Verfahren zur Aktualisierung von Straßenkarten hinsichtlich Attributen bekannter Straßenabschnitte, wie beispielsweise der Möglichkeit des Durchfahrens eines bekannten Straßenabschnittes in einer bestimmten Richtung.

Die US 4,891,761 offenbart die Vermessung einer bekannten Straße unter Kommunikation eines dorthin mit einem Fahrzeug entsandten Fahrers mit einer Zentrale, wobei der Verlauf der bekannten Straße dadurch vermessen wird, daß der Fahrer mit einem Fahrzeug die Straße entlangfährt und dabei von einer Positionserfassungseinheit (Loran-C) im Fahrzeug laufend die Fahrzeugposition erfaßt wird.

Die DE 197 01 370 offenbart ein Navigationsendgerät mit einer Eingabeeinrichtung, in welche ein Benutzer des Navigationsendgerätes neue Straßenabschnitte eingeben kann, welche nicht in einer digitalen Karte im Endgerät enthalten sind. Die JP 08 271 272 A - Abstract - offenbart ein Navigationsendgerät mit einer CD-Rom-basierten digitalen Straßenkarte, wobei das Endgerät beim Verlassen von Straßen der digitalen Straßenkarte interaktiv nach einer Instruktion durch einen Benutzer eine gerade Linie durch eine außerhalb der Straßen der digitalen Straßenkarte liegende Position zum nächsten Knoten der Straßenkarte führende Linie zur Ergänzung der digitalen Straßenkarte erzeugt.

Aufgabe der Erfindung ist die einfache, effiziente und kostengünstige Aktualisierung und/oder Korrektur einer digitalen Straßenkarte eines Verkehrsnetzes. Die Aufgabe wird durch die Gegenstände der unabhängigen Ansprüche gelöst.

Die erfindungsgemäße Lösung ermöglicht eine sehr einfache, effiziente und dabei kostengünstige Aktualisierung und Korrektur einer digitalen Straßenkarte eines Verkehrsnetzes. Die Telekommunikationskosten sind relativ gering, da vom Endgerät lediglich Korrekturen und Zusätze zur aktuellen Version einer digitalen Straßenkarte an die Verkehrszentrale übermittelt werden. Hierzu ist im Endgerät eine digitale Straßenkarte vorgesehen, mit welcher im Endgerät die aktuelle Fahrzeugposition sowie evtl. weitere Daten verglichen werden, um die Erforderlichkeit einer Information der Verkehrszentrale über eine Korrektur oder Ergänzung der in der Verkehrszentrale befindlichen digitalen Straßenkarte zu überprüfen.

Das Endgerät erfaßt wiederholt seine Position, also damit die Fahrzeugposition, und versucht diese einem Straßenabschnitt in der digitalen Karte des Verkehrsnetzes im Endgerät zuzuordnen, wobei in der digitalen Karte die Position von Straßen implizierende geographische Daten abgespeichert sind. Neben Daten zu Straßen können in der digitalen Karte beispielsweise auch Daten zu Parkplätzen, Autobahnraststätten etc. gespeichert sein.

Besonders vorteilhafte Ausgestaltungen der Erfindung ergeben sich aus den Unteransprüchen.

Vorzugsweise werden vom Endgerät neben einer versuchten Zuordnung der Position des Endgerätes zu einem Straßenabschnitt oder dergleichen in der digitalen Karte im Endgerät auch weitere vom Endgerät erfaßte, das Verkehrsnetz betreffende Attribute mit Attributen in der digitalen Karte im Endgerät verglichen. Ein derartiges Attribut kann insbesondere die Fahrtrichtung in einem Fahrbahnabschnitt, eine Sperrung eines Fahrbahnabschnittes in der digitalen Karte etc. sein. Bei Abweichung der vom Endgerät erfaßten realen Attribute eines Straßenabschnittes, an welchem sich das Endgerät befindet, von dem aufgrund der übermittelten Endgerätposition bestimmten Straßenabschnitt in der digitalen Karte im Endgerät, informiert das Endgerät ebenfalls die Zentrale. Damit ist auch eine fortlaufende Korrektur von Attributen möglich.

Bei der Korrektur oder Aktualisierung oder Ergänzung hinsichtlich Straßen wie auch hinsichtlich Attributen muß eine Information der Verkehrszentrale nicht sofort nach Feststellung der ersten Abweichung zwischen erfaßter Realität und digitaler Straßenkarte erfolgen. Stattdessen kann das Endgerät auch in einen Mitschneidemodus umschalten. In diesem Mitschneidemodus können insbesondere fortlaufend vom Endgerät erfaßte Endgerätpositionen im Endgerät gespeichert werden. Ferner kann die Frequenz der Erfassung von Endgerätspositionen im Endgerät verändert, insbesondere erhöht werden. Überdies können laufend weitere Daten hierzu abgespeichert werden. Insbesondere können zu einer Vielzahl von Momenten Attribute, insbesondere Fahrtrichtungen, Fahrtgeschwindigkeiten des Fahrzeuges etc. abgespeichert werden. Zu einem vorgebbaren Zeitpunkt oder Ereignis kann eine Übertragung dieser Informationen an die Verkehrszentrale erfolgen. Beispielsweise ist eine Übertragung nachts bei billigeren Kommunikationskosten möglich. Insbesondere kann mit einer Übertragung auch gewartet werden, bis sich das Fahrzeug wieder auf einer in der digitalen Karte gespeicherten Straße befindet oder/und bis das Fahrzeug abgestellt wird.

Die Information der Verkehrszentrale über eine vom Endgerät befahrene, nicht in der digitalen Karte befindliche Straße kann in unterschiedlicher Form erfolgen. Die letzte vom Endgerät erfaßte Position, die noch in einer digitalen Straßenkarte einer Straße oder dergleichen zugeordnet war, kann übertragen werden. Damit ist die Verkehrszentrale zumindest annähernd über den Ort der Abzweigung einer vom Endgerät befahrenen, nicht in der digitalen Straßenkarte befindlichen Straße informiert. Zur Information der Verkehrszentrale über den Verlauf dieser Straße ist es zweckmäßig, mehrere nacheinander erfaßte Endgerätspositionen an die Verkehrszentrale zu übertragen. Vorzugsweise ist das Datenformat der vom Endgerät an die Verkehrszentrale übertragenen Endgerätsposition vorgegeben, wobei zweckmäßig ein Endgerätpositions-Datensatz die geographische Länge und Breite des Endgerätes mit einer vorgegebenen Anzahl von Stellen gerundet umfaßt, um eine automatische Weiterverarbeitung in der Verkehrszentrale zu ermöglichen.

Zweckmäßig ist das Meldeverhalten des Endgerätes am Endgerät und/oder per Mobilfunk von der Verkehrszentrale veränderbar. Bei Veränderung des Meldeverhaltens des Endgerätes kann beispielsweise eingegeben werden, daß das Endgerät Informationen an die Verkehrszentrale nachts, also mit niedrigeren Telekommunikationskosten, überträgt. Wenn an einer Straße Umbauarbeiten etc. erwartet werden, kann zumindest für diese Region das Meldeverhalten eines Endgerätes derart verändert werden, daß relativ bald nach Erfassung von Abweichungen zur digitalen Karte im Endgerät eine Information der Verkehrszentrale erfolgt.

Zweckmäßig umfassen die Informationen, welche das Endgerät an die Verkehrszentrale übermittelt, in einem vorgebbaren Datenformat eine Bezeichnung derjenigen Karte und/oder Kartenversion, auf weiche sich die Information bezieht, um eine automatische Weiterverarbeitung zu ermöglichen. Dies ist z.B. bedeutsam, wenn im Endgerät mehrere verschiedene Karten beispielsweise verschiedener Hersteller verwendet werden, insbesondere wenn regelmäßige Aktualisierungen von Karten im Endgerät durch eine Verkehrszentrale per Mobilfunk etc. erfolgt, wobei für eine Aktualisierung eine Karte mit einer neuen Kartenversionsnummer bezeichnet wird.

Femer ist es zweckmäßig, im Endgerät und in der Verkehrszentrale eine gleiche Straßenkarte bzw. bei mehreren Kartenversionen gleiche Straßenkarten zu verwenden, um eine automatische Bearbeitung von vom Endgerät an die Verkehrszentrale gesandten Informationen zu ermöglichen. Eine Verwendung der gleichen Straßenkarte bedeutet hier nicht notwendigerweise nur eine byte-weise identische Straßenkarte sondern beispielsweise auch eine digitale Karte des gleichen Herstellers, evtl. jedoch mit unterschiedlichen Aktualisierungen, Änderungen und/oder Ergänzungen in der Verkehrszentrale und im Endgerät, also unterschiedliche Kartenversionen.

Die Übertragung der Informationen vom Endgerät an die Zentrale erfolgt zweckmäßig per Funk, insbesondere Mobilfunk.

Das erfindungsgemäße Verfahren kann im Endgerät und/oder in einer Verkehrszentrale als Programm realisiert werden.

Weitere Merkmale und Vorteile ergeben sich aus der nachfolgenden Beschreibung eines Ausführungsbeispiels anhand der Zeichnung. Dabei zeigt als einzige Figur:

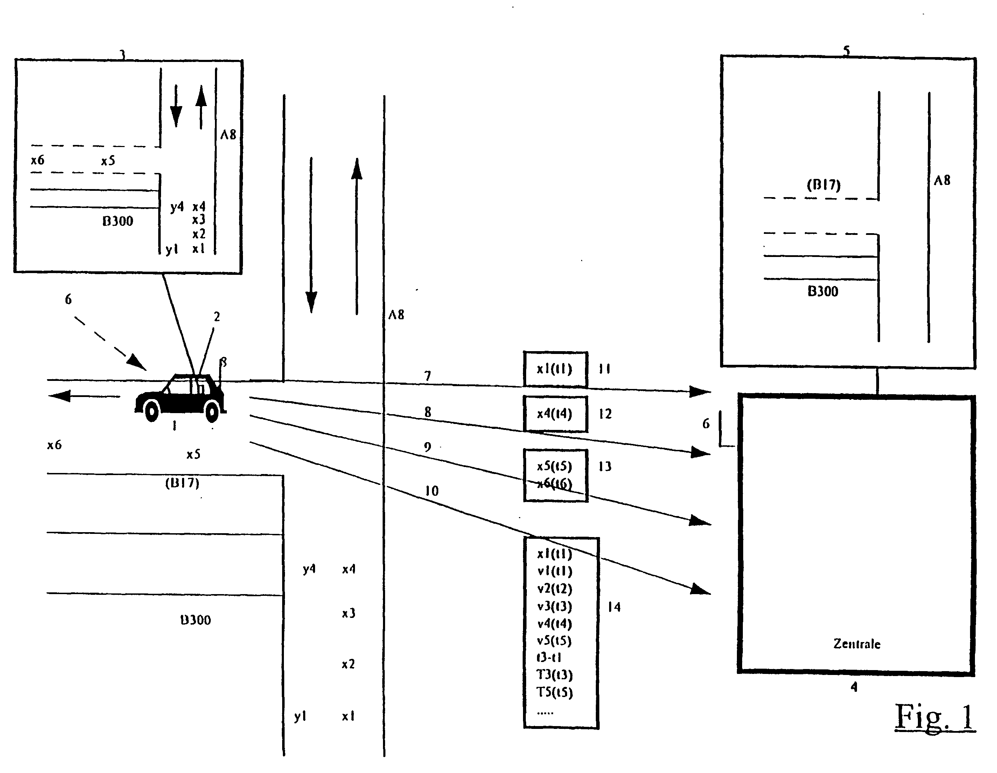

- Fig. 1: ein Endgerät mit einer digitalen Karte und eine Verkehrszentrale mit einer digitalen Karte.

im Fahrzeug 1 in Fig. 1 ist ein Endgerät 2 vorgesehen, in welchem eine digitale Karte 3 eines Netzes abgespeichert ist. In einer Verkehrszentrale 4 ist ebenfalls eine identische oder ähnliche digitale Karte 5 abgespeichert. Die Verkehrszentrale 4 kann eine Verkehrserfassungszentrale und/oder Verkehrsprognosezentrale und/oder Verkehrsnavigationshilfezentrale sein, die Informationen für Kraftfahrzeugendgeräte per Radio oder Mobilfunk, simplex oder interaktiv aussendet. Straßen (A8 etc.) sind in der Karte 3,5 hier in Straßenabschnitte in Fahrtrichtung unterteilt abgespeichert.

Wenn sich das Fahrzeug 1 mit dem Endgerät 2 im Verkehrsnetz auf Straßen (A8 etc.) oder dergleichen fortbewegt, kann es fortlaufend seine Position bestimmen und diese bestimmte Position einem Straßenabschnitt etc. in der digitalen Karte 3 im Endgerät 2 zuordnen.

Hierzu erfaßt das Endgerät 2 wiederholt seine Position x1; x2; x3; x4; x5; x6. Die Position kann beispielsweise fortlaufend in bestimmten Intervallen und/oder nach bestimmten Ereignissen wie Lenkausschlägen des Lenkrades des Fahrzeuges 1, welche auf Abbiegen hindeuten etc. erfaßt werden. Die Erfassung kann insbesondere durch den Empfang eines GPS-Signals (Global Positioning System - Satelitengestütztes Positionserfassungssystem) durch das Endgerät 2 erfolgen. Überdies oder stattdessen ist auch eine Positionsbestimmung des Fahrzeuges anhand der digitalen Karte 3 und Lenkradausschlägen im Fahrzeug 1 sowie Geschwindigkeits- und/oder Wegmessungen im Fahrzeug 1 über das Endgerät 2 möglich.

Eine Position x1 kann beispielsweise die geographische Länge und Breite des Fahrzeuges mit vorgebbarer Rundung umfassen. Beispielsweise kann die Position des Fahrzeuges x2 zu einem bestimmten Zeitpunkt 12°, 34 min., 56 sec. westlicher Länge, 78°, 0 min., 12 sec. nordlicher Breite umfassen und im Endgerät als "123456780012" = x2 erfaßt und gespeichert werden. Anhand der erfaßten Position des Endgerätes kann dieses seine Position in einer digitalen Karte 3 bestimmen. Dabei stellt es beispielsweise fest, daß die in der digitalen Karte eingezeichnete Position x1 sich auf einer Straße A8 in der digitalen Karte 3 befindet. In diesem Falle ist keine Information der Zentrale 4 erforderlich, da offensichtlich keine Korrektur erforderlich ist. Jedoch kann sich auch ergeben. daß die festgestellte Position des Fahrzeuges 1 sich an der in der digitalen Karte 3 beispielshaft eingezeichneten Position x5 oder x6 befindet. An den Positionen x5 oder x6 ist jedoch in der digitalen Karte 3 keine Straße eingezeichnet. Somit ist eine Aktualisierung der Karte erforderlich. Damit nicht nur dem einzelnen Fahrzeug 1 eine aktuelle Karte 3 des Verkehrsnetzes vorliegt, wird eine Information 13 hierzu an die Verkehrszentrale 4 übertragen. Die Zentrale 4 kann hierauf ihre Karte 5 aktualisieren; dies bedeutet in diesem Falle eine neue Straße, welche durch die Positionen x5, x6 verläuft, in die digitale Karte 15 einzutragen. Evtl. können noch weitere Kriterien berücksichtigt werden, beispielsweise ob mehrere Fahrzeuge sich auf einer durch die Positionen x5, x6 implizierten neuen Straße B17 fortbewegen und eine Änderung nur in diesem Falle eingetragen werden. Im vorliegenden Falle wird angenommen, daß es eine durch die Positionen x5, x6 verlaufende Straße (B17) in der digitalen Karte (3 und 5) gibt. Deshalb übermittelt das Endgerät 2 per Funk - hier Mobilfunk (Antenne) - an die Zentrale 4 Informationen 13 hierüber. Dabei werden hier die Positionen x5, x6, an welcher sich das Fahrzeug 1 befindet, übertragen. Gegebenenfalls kann auch die letzte Position x4, auf welcher sich das Fahrzeug 1 noch auf einer Straße in der digitalen Karte 3 befand, mit übertragen werden. Das Meldeverhalten, also wann das Endgerät 2 Informationen über eine neue Straße B17 überträgt, kann einstellbar sein. Zweckmäßig kann beispielsweise eine Einstellung auf abendliche oder nächtliche Zeiten sein, zu welchen niedrigere Telekommunikationskosten als tagsüber anfallen.

Femer kann das Endgerät beispielsweise aufgrund zweier aufeinanderfolgender Messungen x2, x3 die Fahrtrichtung des Fahrzeuges bestimmen und damit ein Attribut eines Fahrbahnabschnittes (der A8), nämlich die Befahrbarkeit in der Fahrtrichtung, in welcher das Fahrzeug 1 fährt, feststellen. Auch dieses Attribut kann, wenn es von in der Karte 3 im Endgerät 2 gespeicherten Attributen abweicht, per Mobilfunk 8, 6 etc. an die Zentrale 4 übertragen werden.

Auch die Art der Übertragung der Informationen über eine neue Straße kann unterschiedlich sein. Beispielsweise können, nachdem festgestellt wurde, daß das Fahrzeug 1 bekannte Straßen (A8, B300) in der digitalen Straßenkarte 3 verläßt, in regel-mäßigen, insbesondere in kürzeren Zeitabständen als sonst durch GPS etc. erfaßte Positionen des Fahrzeuges 1 im Endgerät 2 gespeichert werden. Diese können beispielsweise als Paket an die Verkehrszentrale 4 übertragen werden. Eine Übertragung eines Paketes kann beispielsweise erst dann begonnen werden, wenn sich das Fahrzeug 1 in der Karte 3 wieder auf einer bekannten Straße B17, A8 etc. befindet. Um die Übertragungskosten weiter zu senken, kann das Verfahren durch einen im Endgerät implementierten Auswahlalgorithmus weiter verfeinert werden. Dieser Auswahlalgorithmus wählt aus der Menge der gemessenen Positionsdaten nach - idealerweise auch von außen (z.B. von der Zentrale per Funk) - vorgebbaren Kriterien die zu übertragenden Meßdaten aus. Dies führt zu einer logischen Komprimierung des gemessenen Weges und somit zu einer intelligenten Übertragung der vermessenen Strecke.

Das erfindungsgemäße Verfahren ist zweckmäßig im Endgerät 2 bzw. in der Verkehrszentrale 4 als Programm implementiert. Das Endgerät 2 und die Verkehrszentrale 4 weisen Sende- und Empfangseinrichtungen, insbesondere für Mobilfunk, auf.

Von der Zentrale 4 ist eine Aktualisierung von digitalen Karten 3 in anderen Endgeräten per Mobilfunk und/oder beispielsweise über Radio, insbesondere Digitalradio, möglich.

## Patentansprüche

1. Verfahren zur Aktualisierung und/oder Ergänzung einer digitalen Straßenkarte (3, 5) eines Verkehrsnetzes,
insbesondere einer digitalen Straßenkarte (3, 5) zur Verkehrserfassung und/oder Verkehrsprognose und/oder Navigation von Kraftfahrzeugen (1) unter Verwendung einer Verkehrszentrale (4),
wobei durch ein Endgerät (2) in mindestens einem Fahrzeug (1) wiederholt zumindest die Position (x1, x2, x3, x4, x5, x6) des Fahrzeuges (1) erfaßt wird und wobei die Position (x1, x2, x3, x4, x5, x6) einer digitalen Straßenkarte (3) im Endgerät (2) zugeordnet wird,
wobei zumindest überprüft wird, ob sich an einer der erfaßten Position (x5) des Fahrzeuges (1) zugeordneten Position (x5) in der digitalen Straßenkarte (3) eine Straße (A8, B300) oder dergleichen befindet,
wobei zumindest, wenn sich dort (x5) in der digitalen Karte (3) keine Straße oder dergleichen befindet, das Endgerät (2) die Verkehrszentrale 4 informiert (9, 13),
wobei das Endgerät (2) einen Weg, zu dem sich in der digitalen Karte (3) keine Straße (A8) oder dergleichen befindet, anhand seiner fortlaufend bestimmten Position speichert und
wobei das Endgerät (2) die Verkehrszentrale (4) über mehrere, nacheinander erfaßte (6) Positionen des Endgerätes (2) informiert, die in der digitalen Karte (3) keiner Straße oder dergleichen zugeordnet sind.

2. Verfahren nach Anspruch 1,
**dadurch gekennzeichnet,**
**daß** das Endgerät (2) überdies weitere von ihm erfaßte, das Verkehrsnetz (A8, B300) betreffende Attribute (Fahrtrichtung) durch Vergleich mit in der digitalen Karte (3) im Endgerät (2) gespeicherten Attributen zur durch die Endgerätsposition (x1) implizierten Straße (A8) oder dergleichen überprüft und bei einer Abweichung der erfaßten Attribute von den gespeicherten Attributen die Verkehrszentrale (4) informiert.

3. Verfahren nach den Ansprüchen 1 oder 2,
**dadurch gekennzeichnet,**
**daß** das Endgerät (2) über seine letzte erfaßte Position (x4), die noch in einer digitalen Straßenkarte (3) einer Straße (A8) zugeordnet war, die Verkehrszentrale (4) informiert.

4. Verfahren nach einem der vorhergehenden Ansprüche,
**dadurch gekennzeichnet,**
**daß** das Endgerät (2) seine Position (x1, x2, x3, x4, x5, x6) in einer vorgebbaren, seine geographische Länge (12°, 34 min., 56 sec. westlicher Länge) und Breite (78°, 0 min., 12 sec. nördlicher Breite) implizierender Form (123456780012), insbesondere als Rundung seiner geographischen Länge und Breite auf eine jeweils vorgegebene Länge, an die Zentrale (4) überträgt.

5. Verfahren nach einem der vorhergehenden Ansprüche,
**dadurch gekennzeichnet,**
**daß** das Endgerät (2) den gesamten Weg in einer Übertragung an die Verkehrszentrale (4) überträgt.

6. Verfahren nach einem der vorhergehenden Ansprüche,
**dadurch gekennzeichnet,**
**daß** anhand eines im Endgerät implementierten Auswahlalgorithmus aus den gemessenen und temporär gespeicherten Positionsdaten die zu übertragenden Positionsdaten ausgewählt werden.

7. Verfahren nach einem der vorhergehenden Ansprüche,
**dadurch gekennzeichnet,**
**daß** das Meldeverhalten des Endgerätes (2) am Endgerät (2) und/oder per Mobilfunk (8) von der Verkehrszentrale (4) veränderbar ist.

8. Verfahren nach einem der vorhergehenden Ansprüche,
**dadurch gekennzeichnet,**
**daß** bei der Information (7 bis 10) der Verkehrszentrale (4) eine vorgebbare Bezeichnung derjenigen Karte und/oder derjenigen Kartenversion übertragen wird, auf welche sich die Information (7 bis 10) bezieht.

9. Verfahren nach einem der vorhergehenden Ansprüche,
**dadurch gekennzeichnet,**
**daß** im Endgerät (2) eine gleiche Straßenkarte wie in der Verkehrszentrale (4) verwendet wird.

10. Verfahren nach einem der vorhergehenden Ansprüche,
**dadurch gekennzeichnet,**
**daß** die Übertragung (7 bis 10) der Informationen (11 bis 14) an die Zentrale (4) per Funk, insbesondere Mobilfunk (8), erfolgt.

11. Verfahren nach einem der vorhergehenden Ansprüche,
**dadurch gekennzeichnet,**
**daß** das Fahrzeug (1) bei einer Abweichung (x5, x6) von Straßen (A8) in der digitalen Karte (3) und/oder bei einer Abweichung zu einem Attribut in der digitalen Karte (3) einen Mitschneidemodus umschaltet.

12. Endgerät mit einem Programm zur Durchführung des Verfahrens nach einem der vorhergehenden Ansprüche, mit einem Speicher für das Programm und für eine digitale Karte (3) eines Verkehrsnetzes (A8, B300), mit einem Prozessor zum Abarbeiten des Programms und mit einem Kommunikationsmodul (8) zum Informieren (9) einer Verkehrszentrale (4).

13. Endgerät nach Anspruch 12,
**dadurch gekennzeichnet,**
**daß** es eine GPS-Positionserfassungseinrichtung (6) aufweist.

14. Verkehrszentrale (4) mit einem Programm zur Durchführung des Verfahrens nach einem der Ansprüche 1 bis 11,
mit einem Speicher für das Programm und für eine digitale Karte (5) eines Verkehrsnetzes (A8, B17), mit einem Prozessor zum Abarbeiten des Programms und
mit einem Kommunikationsmodul (6) zum Empfangen von Informationen (11 bis 14) vom Endgerät (2) mindestens eines Fahrzeuges (1).

## Claims

1. A method for updating and/or adding to a digital road map (3, 5) of a traffic network,
in particular a digital road map (3, 5) for traffic detection and/or traffic forecasting and/or navigation of motor vehicles (1) using a traffic control centre (4),
in which a terminal device (2) in at least one vehicle (1) is used to repeatedly detect at least the position (x1, x2, x3, x4, x5, x6) of the vehicle (1) and in which the position (x1, x2, x3, x4, x5, x6) is associated with a digital road map (3) in the terminal device (2),
in which there is a check at least of whether a road (A8, B300) or the like is located at a position (x5) on the digital road map (3) associated with the detected position (x5) of the vehicle (1),
in which, at least when no road or the like is located there (x5) on the digital map (3), the terminal device (2) informs the traffic control centre 4 (9, 13),
in which the terminal device (2) stores a path at which there is no road (A8) or the like on the digital map (3) using its continuously determined position, and
in which the terminal device (2) informs the traffic control centre (4) of a plurality of positions of the terminal device (2) detected one after the other (6) and not associated with a road or the like on the digital map (3).

2. A method according to Claim 1, **characterised in that** the terminal device (2) moreover checks further attributes detected by it and relating to the traffic network (A8, B300) (direction of travel) by comparison with attributes stored in the terminal device (2) in the digital map (3) relating to the road (A8) indicated by the terminal device position (x1), and in the event of a deviation of the detected attributes from the stored attributes informs the traffic control centre (4).

3. A method according to Claim 1 or 2, **characterised in that** the terminal device (2) informs the traffic control centre (4) of its last detected position (x4) which was still associated with a road (A8) on a digital road map (3).

4. A method according to one of the preceding claims, **characterised in that** the terminal device (2) transmits to the control centre (4) its position (x1, x2, x3, x4, x5, x6) in a predeterminable form (123456780012) indicative of its geographical length (12°, 34 min., 56 sec. west) and breadth (78°, 0 min., 12 sec. north), in particular as a rounding of its geographical length and breadth to an in each case predetermined length.

5. A method according to one of the preceding claims, **characterised in that** the terminal device (2) transmits to the traffic control centre (4) the entire path in one transmission.

6. A method according to one of the preceding claims, **characterised in that** a selection algorithm implemented in the terminal device is used to select the position data to be transmitted from the measured and temporarily stored position data.

7. A method according to one of the preceding claims, **characterised in that** the signalling behaviour of the terminal device (2) is alterable at the terminal device (2) and/or by mobile radio (8) from the traffic control centre (4).

8. A method according to one of the preceding claims, **characterised in that** within the information (7 to 10) of the traffic control centre (4) a predeterminable designation of that map and/or that version of the map to which the information (7 to 10) relates is transmitted.

9. A method according to one of the preceding claims, **characterised in that** the same road map is used in the terminal device (2) as in the traffic control centre (4).

10. A method according to one of the preceding claims, **characterised in that** transmission (7 to 10) of the information (11 to 14) to the control centre (4) is by radio, in particular mobile radio (8).

11. A method according to one of the preceding claims, **characterised in that** in the event of a deviation (x5, x6) from roads (A8) on the digital map (3) and/or in the event of a deviation from an attribute on the digital map (3) the vehicle (1) switches over to a real-time recording mode.

12. A terminal device having a program for carrying out the method according to one of the preceding claims, having a memory for the program and for a digital map (3) of a traffic network (A8, B300), having a processor for processing the program and having a communications module (8) for informing (9) a traffic control centre (4).

13. A terminal device according to Claim 12, **characterised in that** it has a GPS position detection device (6).

14. A traffic control centre (4) having a program for carrying out the method according to one of Claims 1 to 11, having a memory for the program and for a digital map (5) of a traffic network (A8, B17), having a processor for processing the program and having a communications module (6) for receiving information (11 to 14) from the terminal device (2) of at least one vehicle (1).

## Revendications

1. Procédé pour actualiser et/ou compléter une carte routière numérique (3, 5) d'un réseau routier, en particulier une carte routière numérique (3, 5) pour la détection du trafic et/ou des pronostics de trafic et/ou la navigation de véhicules automobiles (1) en utilisant une centrale de trafic (4), au moins la position (x1, x2, x3, x4, x5, x6) du véhicule (1) étant détectée de façon répétée dans au moins un véhicule (1) par un terminal (2) et la position (x1, x2, x3, x4, x5, x6) étant associée à une carte routière numérique (3) dans le terminal (2), en vérifiant au moins si une voie routière (A8, B300) ou analogue se trouve sur une position (x5) associée à la position détectée (x5) du véhicule (1) sur la carte routière numérique (3), au moins quand, là (x5), il ne se trouve aucune voie routière ou analogue sur la carte numérique (3), le terminal (2) informant (9, 13) la centrale de trafic (4), le terminal (2) mémorisant, en référence à sa position déterminée de façon continue, un trajet pour lequel il ne se trouve aucune voie routière (A8) ou analogue sur la carte numérique (3), et le terminal (2) informant la centrale de trafic (4) sur plusieurs positions, détectées successivement (6), du terminal (2), qui ne sont associées, sur la carte numérique (3), à aucune voie routière ou analogue.

2. Procédé selon la revendication 1,
**caractérisé en ce que** le terminal (2) vérifie de plus d'autres attributs, détectés par lui, concernant le réseau routier (A8, B300) (direction de marche) par comparaison avec des attributs mémorisés dans la carte numérique (3) dans le terminal (2) pour la voie routière (A8) ou analogue implicite du fait de la position (x1) du terminal, et informe la centrale de trafic (4) lors d'un écart des attributs détectés des attributs mémorisés.

3. Procédé selon la revendication 1 ou 2,
**caractérisé en ce que** le terminal (2) informe la centrale de trafic (4) sur sa dernière position détectée (x4), qui était encore associée, sur une carte routière numérique (3), à une voie routière (A8).

4. Procédé selon une des revendications précédentes,
**caractérisé en ce que** le terminal (2) transmet à la centrale (4) sa position (x1, x2, x3, x4, x5, x6) sous une forme pouvant être prédéfinie (123456780012) impliquant sa longitude (12°, 34 mn, 56s de longitude ouest) et sa latitude (78°, 0 mn, 12s de latitude nord), en particulier comme arrondi de sa longitude et de sa latitude à une longitude à chaque fois prédéfinie.

5. Procédé selon une des revendications précédentes,
**caractérisé en ce que** le terminal (2) transmet le trajet total à la centrale de trafic (4) en un transfert.

6. Procédé selon une des revendications précédentes,
**caractérisé en ce que** les données de position à transmettre sont choisies en référence à un algorithme de sélection implanté dans le terminal à partir des données de position mesurées et mémorisées de façon temporaire.

7. Procédé selon une des revendications précédentes,
**caractérisé en ce que** le mode de signalisation du terminal (2) peut être modifié au niveau du terminal (2) et/ou par radiotéléphonie mobile (8) à partir de la centrale de trafic (4).

8. Procédé selon une des revendications précédentes,
**caractérisé en ce que**, pour l'information (7 à 10) de la centrale de trafic (4), il est transmis une désignation pouvant être prédéfinie de chaque carte et/ou de chaque version de carte, à laquelle se rapporte l'information (7 à 10).

9. Procédé selon une des revendications précédentes,
**caractérisé en ce que**, dans le terminal (2), il est utilisé une carte routière identique à celle dans la centrale de trafic (4).

10. Procédé selon une des revendications précédentes,
**caractérisé en ce que** le transfert (7 à 10) des informations (11 à 14) à la centrale (4) est effectué par radio, en particulier radiotéléphonie mobile (8).

11. Procédé selon une des revendications précédentes,
**caractérisé en ce que** le véhicule (1), pour un écart (x5, x6) de voies routières (A8) sur la carte numérique (3) et/ou pour un écart par rapport à un attribut sur la carte numérique (3), passe à un mode d'enregistrement.

12. Terminal comportant un programme pour la mise en oeuvre du procédé selon une des revendications précédentes, ayant une mémoire pour le programme et pour une carte numérique (3) d'un réseau routier (A8, B300), un processeur pour exploiter le programme, et un module de communication (8) pour informer (9) une centrale de trafic (4).

13. Terminal selon la revendication 12,
**caractérisé en ce qu'**il présente un dispositif de détection de position GPS (6).

14. Centrale de trafic (4) comportant un programme pour la mise en oeuvre du procédé selon une des revendications 1 à 11, ayant une mémoire pour le programme et pour une carte numérique (5) d'un réseau routier (A8, B17), un processeur pour exploiter le programme, et un module de communication (6) pour recevoir des informations (11 à 14) du terminal (2) d'au moins un véhicule (1).
